# EUROPÄISCHE PATENTSCHRIFT

(11) **EP 2 180 308 B1**
(45) Veröffentlichungstag und Bekanntmachung des Hinweises auf die Patenterteilung: **31.08.2011**
(21) Anmeldenummer: 08018468.2
(22) Anmeldetag: 22.10.2008
(51) Int. Cl.: G01N 17/00

(54) **Vorrichtung zur Steigerung der Luftfeuchtigkeit einer Freibewitterung**
Apparatus for increasing the humidity of outdoor weather
Dispositif d'augmentation de l'humidité de l'air d'un vieillissement libre

(43) Veröffentlichungstag der Anmeldung: 28.04.2010
(73) Patentinhaber: Müller, Hans-Willi, 41352 Korschenbroich (DE); Schlegelmilch, Hans Peter, 41169 Mönchengladbach (DE); Trienekens-Daems, Eva, 41749 Viersen (DE)
(72) Erfinder: Müller, Hans-Willi, DE-41352 Korschenbroich (DE); Schlegelmilch, Hans Peter, DE-41169 Mönchengladbach (DE)
(74) Vertreter: Henseler, Daniela

(56) Entgegenhaltungen:
- DE-U1-202005 000 092
- FR-A- 790 965
- US-A- 2 945 417
- US-A- 3 521 966

## Beschreibung

Die Erfindung betrifft eine Vorrichtung zur Steigerung der Luftfeuchtigkeit einer Freibewitterung nach Anspruch 1.

Es ist bekannt, Materialien einer Freibewitterung auszusetzen, um ihre Widerstandsfähigkeit gegen Witterungseinflüsse unter "echten Umgebungsbedingungen" zu testen. Das Alterungsverhalten von bei der Anwendung der freien Witterung ausgesetzten Materialien wird im "Freiversuch" getestet, um den Einfluss von Sonnenstrahlung, Temperatur, Regen, Feuchtigkeit usw. zu ermitteln.

Insbesondere bei der Automobilindustrie ist ein Bestandteil der Entwicklung von Kraftfahrzeugen die Prüfung als Ganzes auf Tauglichkeit für unterschiedliche Witterungsbedingungen. Neben dem Lack und den äußeren Werkstoffen und/oder Beschichtungen wird der Innenraum mit den entsprechenden Materialen auf die Witterungsverhältnisse im Freiversuch getestet. Diese ergeben sich aus den jeweiligen Jahreszeiten sowie aus zum Teil extrem voneinander abweichenden Klimazonen auf der Erde. Einen Hauptaspekt stellt der Einfluss der solaren Einstrahlung auf ein Kraftfahrzeug dar, um die Auswirkungen hinsichtlich Strahlungs- und Temperatureinwirkung zu erfassen.

Die Prüfungen werden an unterschiedlichen Stellen der Erde an Freibewitterungsorten mit extremen Witterungsbedingungen durchgeführt. Die Prüfungen für die Kraftfahrzeugindustrie werden zur Erzielung extremer Klimabedingungen beispielsweise in Florida bzw. Kwazulu Natal (für feucht-heißes Klima) und Arizona bzw. der Kalahari (für trocken-heißes Klima) durchgeführt. Aufgrund der zum Teil mehrere Jahre dauernden Freibewitterung mit den entsprechenden Kosten für die lange Versuchsdauer und Transport- und Logistikkosten, um die Proben bzw. Kraftfahrzeuge in die entsprechenden Klimazonen zu bringen, hat man spezielle Verfahren zur Prüfzeitverkürzung angewendet, die zu einer verkürzten Zeitdauer für die Versuche im Labor geführt haben. Die Bedingungen für die Freibewitterung werden nachgestellt und intensiviert bzw. künstlich gesteigert.

Aus DE 101 55 245 B4 ist es beispielsweise bekannt, Bewitterungssimulationen in Bewitterungskammern durchzuführen. Eine Bewitterungskammer unterliegt dabei einem inhärenten Nachteil, dass die Bewitterung nur simuliert werden kann, und Vorbehalte hinsichtlich einer solchen Simulation bestehen.

Die aus ökonomischen Gründen gewünschten kürzeren Prüfzeiten werden durch intensivierte und damit unnatürliche Belastungen der Proben bzw. Kraftfahrzeuge erkauft. Hierbei besteht die Gefahr, dass Alterungsvorgänge initiiert werden, die im Freien nicht auftreten. Auf eine "echte" Freibewitterung kann nicht verzichtet werden, da man die sichersten Aussagen und Daten über die Widerstandsfähigkeit der Materialien durch die den realen Bedingungen am nächsten kommenden Bedingungen in Freibewitterungen und anschließender Prüfung der jeweiligen Eigenschaften erhält.

Aufgabe der Erfindung ist es, eine Vorrichtung zur Steigerung der Luftfeuchtigkeit einer Freibewitterung zu schaffen, die eine vereinfachte Testmöglichkeit für die Durchführung einer Freibewitterung ermöglicht.

Die Aufgabe wird gemäß den Merkmalen des Anspruchs 1 gelöst.

Hierdurch wird eine Vorrichtung zur Steigerung der Luftfeuchtigkeit für eine Freibewitterung von Testproben, insbesondere Kraftfahrzeugen, in einem Testbereich geschaffen. Die Vorrichtung weist ein Gradierwerk zur Steuerung der Höhe der Luftfeuchtigkeit in dem Testbereich durch Abfuhr einer verdunsteten Fluidmenge auf. Ferner umfasst die Vorrichtung eine Einrichtung zur Messung der Höhe der Luftfeuchtigkeit in Abhängigkeit von der Zeit während einer Testdauer. Mit der Vorrichtung kann in einem trocken-heißen Klima ein feucht-heißes Klima simuliert werden, das den natürlichen Eigenschaften eines feucht-heißen Klimas im Wesentlichen entspricht. Das Gradierwerk der Vorrichtung steigert die Luftfeuchtigkeit ohne beispielsweise Sprühregen zu verwenden; es liegt eine "natürliche" Erhöhung der Luftfeuchtigkeit vor. Es braucht nur ein Transport und eine Freibewitterung mit anschließender Untersuchung in einem trocken-heißen Klima (bspw. Arizona oder Kalahari) zu erfolgen, und in dem trocken-heißen Klima kann zumindest das feucht-heiße Klima erzeugt werden. Somit kann ein Transport von Testproben, insbesondere Kraftfahrzeugen, beispielsweise nach Arizona oder in die Kalahari (trocken-heißes Klima) eine Freibewitterung sowohl in einem (nichtmodifizierten) trocken-heißen Klima und mit der erfindungsgemäßen Vorrichtung zur Steigerung der Luftfeuchtigkeit für eine Freibewitterung in einem (künstlich beeinflussten bzw. erzeugten) feucht-heißen Klima (beispielsweise wie es dem in Florida oder dem Kwazulu Natal entspricht) untersucht werden. Ferner wird über die Einrichtung zur Messung der Höhe der Luftfeuchtigkeit im Testbereich und eine entsprechende Aufzeichnung der Messung eine Aussage getroffen, welche Luftfeuchtigkeit über die Zeit betrachtet während der Testdauer vorlag. Es wird somit überprüft, ob und wann ein feucht-heißes Klima vorliegt bzw. vorlag. Die Testproben können, wie erwähnt, insbesondere Kraftfahrzeuge sein; die Testproben können aber auch jede andere Art von Proben sein, für die ein Test hinsichtlich einer Freibewitterung sinnvoll ist (Proben mit zu testenden (Außen-)Anstrichen, beschichtete (Fenster-)Gläser, Kunststoffe für den Außenbereich usw.).

Die Erfinder waren die ersten, die überraschenderweise festgestellt haben, dass eine Freibewitterung im feucht-heißen Klima in einer trocken-heißen Klimazone "im Freien" nachgestellt werden kann, ohne dass Alterungsvorgänge initiiert werden, die im Freien nicht auftreten. Zudem werden erhebliche Kosten gespart, da Proben erheblichen Umfangs, wie beispielsweise Kraftfahrzeuge, nur an einen Ort mit trocken-heißem Klima transportiert werden müssen.

Bevorzugt weist die Vorrichtung eine Steuerung des Verlaufs der Luftfeuchtigkeit in Abhängigkeit vom Abstand zum Gradierwerk auf, um im Testbereich definierte einstellbare Bedingungen zu erhalten. Durch die Steuerung des Verlaufs der Luftfeuchtigkeit in Abhängigkeit vom Abstand zum Gradierwerk ist es möglich, einen Testbereich an die zur Verfügung stehende Fläche anzupassen, indem beispielsweise bei einem größeren Abstand mehrerer Gradierwerke bzw. der Flügel eines Gradierwerks eine entsprechende Einstellung der Luftfeuchtigkeit erfolgt. Ebenso kann ein geringer Abstand von Gradierwerken bzw. Flügeln eines Gradierwerks zueinander berücksichtigt werden.

Für eine besonders einfache Ausgestaltung umfasst das Gradierwerk mehrere Flügel, die einen teilumstellten Testbereich ausbilden. Durch den teilumstellten Testbereich ist eine weitere Steigerung der Luftfeuchtigkeit im Testbereich möglich, da eine noch gesättigtere Atmosphäre mit Dampf und Aerosolen des Fluids erzeugbar ist. Die Steigerung der Luftfeuchtigkeit erfolgt bei der Ausbildung eines teilumstellten Testbereichs von mehreren Seiten.

Vorzugsweise weist das Gradierwerk zwei nebeneinander angeordnete Rieselflächen auf, die einen Winkel einschließen. Dadurch ist es möglich, den Einstrahlungswinkel in Bezug auf die Luftfeuchtigkeit aus dem Gradierwerk einzustellen, um eine weitere definierte Möglichkeit der Verdunstung hinsichtlich des Fluids zu erhalten.

Bevorzugt weist das Gradierwerk eine Rieselfläche auf, die aus einem Gestrüpp aus Zweigen gebildet ist. Hierdurch können vor Ort vorkommende bzw. vorliegende Materialien verwendet werden, um eine Rieselfläche mit erhöhter Oberfläche zu erhalten, um die Effizienz des Gradierwerks in Bezug auf die Steigerung der Luftfeuchtigkeit zu erhöhen. Das Gestrüpp aus Zweigen ist tragfähig und liefert eine große Oberfläche mit Hohlräumen.

Vorzugsweise wird als Fluid Wasser verwendet, das vor Ort vorhanden ist. Mit dem Wasser als Fluid kann ein feucht-heißes Klima über die Steigerung der Luftfeuchtigkeit eingestellt werden.

Bevorzugt kann als Fluid auch salzhaltiges Wasser verwendet werden, mit dem ein feucht-heißes Klima mit salzhaltiger Atmosphäre erzielbar ist.

In einer bevorzugten Ausführung ist das Gradierwerk als Teil eines Sichtschutzes um den Testbereich ausgebildet, so dass mit der Steigerung der Luftfeuchtigkeit auch ein Schutz möglich ist, ob und welche Testproben im Testbereich vorhanden sind.

Als weiterer Schutz kann vorzugsweise das Gradierwerk mit einem Überkletterungsschutz an der dem Testbereich abgewandten Seite ausgestaltet sein. Der Überkletterungsschutz kann beispielsweise Stacheldraht aufweisen.

Zur vereinfachten Gewährleistung einer bestimmten Höhe der Luftfeuchtigkeit im Testbereich kann eine Steuerung vorgesehen sein, die mit der Einrichtung zur Messung der Höhe der Luftfeuchtigkeit verbunden ist. Eine Automatisierung kann dadurch erfolgen, dass bei Unterschreiten eines minimalen Sollwerts, die Berieselung oder eine verstärkte Berieselung des Gradierwerks erfolgt.

Zur vereinfachten Dokumentation und Protokollierung kann eine Einrichtung zur Aufzeichnung der gemessenen Höhe der Luftfeuchtigkeit durch die Einrichtung zur Messung der Höhe der Luftfeuchtigkeit während der Testdauer vorgesehen sein, die möglichen Auftraggebern als Protokoll ausgehändigt werden kann. Das Protokoll kann elektronisch oder auf Papier vorliegen bzw. erzeugt werden.

Weitere Ausgestaltungen der Erfindung sind der nachfolgenden Beschreibung und den Unteransprüchen zu entnehmen.

Die Erfindung wird nachstehend anhand eines in den beigefügten schematischen Abbildungen dargestellten Ausführungsbeispiels näher erläutert.
Fig. 1 zeigt eine schematische perspektivische Darstellung einer erfindungsgemäßen Vorrichtung zur Freibewitterung;
Fig. 2 zeigt schematisch die Vorrichtung zur Freibewitterung gemäß Fig. 1 in einer Draufsicht;
Fig. 3 zeigt eine schematische Darstellung eines zweiten Ausführungsbeispiels der erfindungsgemäßen Vorrichtung zur Freibewitterung in Draufsicht;
Fig. 4 zeigt eine schematische Darstellung eines dritten Ausführungsbeispiels der erfindungsgemäßen Vorrichtung zur Freibewitterung in Draufsicht.

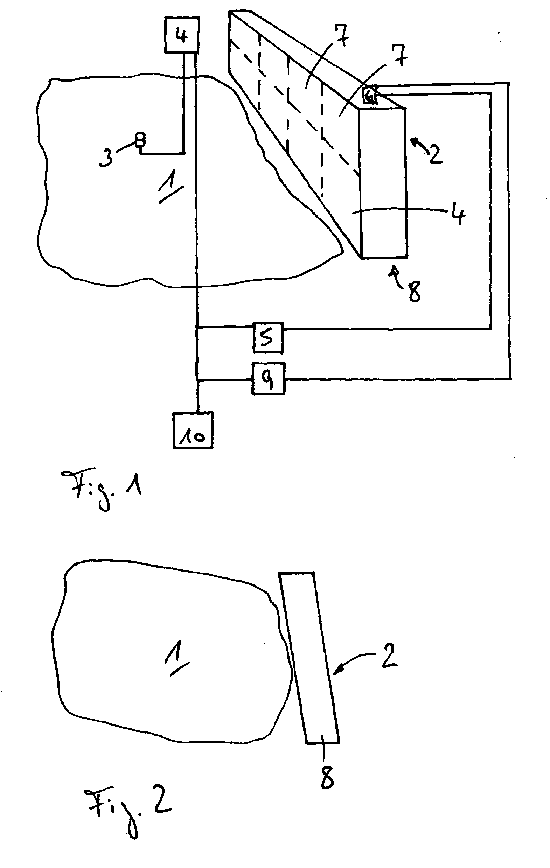

In Fig. 1 ist eine erfindungsgemäße Vorrichtung zur Steigerung der Luftfeuchtigkeit für eine Freibewitterung, insbesondere von Kraftfahrzeugen, in perspektivischer Darstellung schematisch gezeigt. Ein Testbereich 1 ist für die Aufstellung einer oder mehrerer zu testender Proben, beispielsweise ein oder mehrere Kraftfahrzeuge, vorgesehen.

Die Vorrichtung zur Steigerung der Luftfeuchtigkeit einer Freibewitterung umfasst ein Gradierwerk 2 zur Steuerung der Höhe der Luftfeuchtigkeit in dem Testbereich 1. Die Höhe der Luftfeuchtigkeit wird durch die Abfuhr einer verdunsteten Fluidmenge gesteuert. In bzw. an oder auf dem Testbereich 1 ist ein Sensor 3 einer Einrichtung 4 zur Messung der Höhe der Luftfeuchtigkeit in Abhängigkeit von der Zeit während einer Testdauer angeordnet. Mit der Einrichtung 4 zur Messung der Höhe der Luftfeuchtigkeit ist eine Aussage über die im Testbereich 1 herrschende Luftfeuchtigkeit möglich.

Ferner kann mit einer Steuerung 5 der Verlauf der Luftfeuchtigkeit in Abhängigkeit vom Abstand zum Gradierwerk 2 gesteuert werden. Die Steuerung 5 kann beispielsweise eine Berieselungseinrichtung 6 (umfassend eine Pumpe mit Rohr- oder Schlauchleitungssystem) des Gradierwerks 2 steuern, damit vermehrt oder verringert Fluid über Rieselflächen 7 des Gradierwerks 2 rieselt. Die Berieselungseinrichtung 6 kann ein Fluid aus einem Reservoir auf das Gradierwerk 2 von oben aufbringen, so dass das Fluid durch die Rieselflächen 7 rieselt und durch Sonneneinstrahlung und Wind eine natürliche Verdunstung ermöglicht ist.

Um den Verlauf der Luftfeuchtigkeit in Abhängigkeit vom Abstand zum Gradierwerk 2 zu steuern und zunächst den Verlauf zu ermitteln, können mehrere Sensoren in unterschiedlichen Abständen zum Gradierwerk 2 vorgesehen sein, die zur Messung der Luftfeuchtigkeit jeweils ausgestaltet sind. Die Sensoren zur Messung des Verlaufs der Luftfeuchtigkeit in Abhängigkeit vom Abstand vom Gradierwerk 2 können so wie die Sensoren 3 aufgebaut sein.

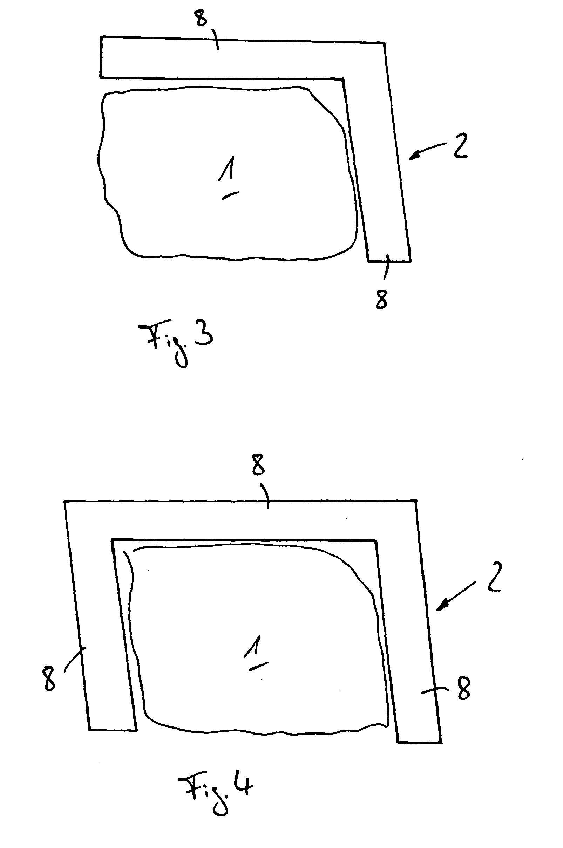

In Fig. 3 ist ein Ausführungsbeispiel der Vorrichtung zur Steigerung der Luftfeuchtigkeit gezeigt, bei dem das Gradierwerk 2 mehrere Flügel 8 umfasst zur Ausbildung eines teilumstellten Testbereichs 1. Die Flügel 8 des Gradierwerks 2 bilden in der Draufsicht ein "L".

In Fig. 4 ist ein weiteres Ausführungsbeispiel der Vorrichtung zur Steigerung der Luftfeuchtigkeit gezeigt, bei der die Flügel 8 des Gradierwerks 2 in der Draufsicht ein "U" bilden.

Zur Einstellung eines Abstrahlungswinkels für die Luftfeuchtigkeit aus dem Gradierwerk 2 können zwei nebeneinander angeordnete Rieselflächen 7 vorgesehen sein, die einen Winkel miteinander einschließen.

Für einen vereinfachten Aufbau ist die eine oder sind die mehreren Rieselflächen 7 des Gradierwerks 2 aus einem Gestrüpp bzw. Bündel aus Zweigen gebildet, um Materialien zu verwenden, die vor Ort vorliegen. Es wird eine Rieselfläche 7 mit erhöhter Oberfläche erhalten, die die Effizienz des Gradierwerks 2 in Bezug auf die Steigerung der Luftfeuchtigkeit erhöht. Das Gestrüpp bzw. die Bündel aus Zweigen sind tragfähig und liefern eine große Oberfläche mit Hohlräumen.

Sofern Wasser als Fluid zur Berieselung der Rieselflächen 7 des Gradierwerks 2 verwendet wird, so ist ein feucht-heißes Klima mit der Vorrichtung zur Steigerung der Luftfeuchtigkeit einstellbar. Sofern salzhaltiges Wasser als Fluid zur Berieselung der Rieselflächen 7 des Gradierwerks 2 verwendet wird, so ist ein feucht-heißes Klima mit salzhaltiger Atmosphäre einstellbar.

Das Gradierwerk 2 kann als Teil eines Sichtschutzes ausgebildet sein und/oder einen Überkletterungsschutz aufweisen.

Es ist eine Steuerung 9 vorgesehen, die mit der Einrichtung 4 zur Messung der Höhe der Luftfeuchtigkeit verbunden ist. Die Steuerung 9 ist so ausgestaltet, dass die Steuerung 9 eine verstärkte Berieselung des Gradierwerks 2 mit Fluid bei Unterschreiten eines minimalen Sollwerts für die gemessene Luftfeuchtigkeit initiiert. Die Steuerung 9 wirkt derart auf die Berieselungseinrichtung 6 ein, dass die Rieselflächen 7 des Gradierwerks 2 mit einer größeren Menge Fluid beaufschlagt werden. Es kann auch vorgesehen sein, dass die Steuerungen 5 und 9 zusammengefasst werden in einer Steuerung, die beispielsweise durch einen Mikrocontroller oder eine analoge Schaltung ausgestaltet ist.

Ferner ist in den dargestellten Ausführungsbeispielen eine Einrichtung 10 zur Aufzeichnung der gemessenen Höhe der Luftfeuchtigkeit vorgesehen, die die gemessene Luftfeuchtigkeit während der Testdauer aufzeichnet. Dabei kann eine kontinuierliche Protokollierung erfolgen, oder es können in vorgegebenen Zeitintervallen, beispielsweise einmal pro Stunde oder pro Tag, Messwerte aufgenommen werden. Als Aufzeichnungsmedium kann Papier oder ein elektronisches Medium dienen.

## Patentansprüche

1. Vorrichtung zur Steigerung der Luftfeuchtigkeit einer Freibewitterung von Testproben in einem Testbereich (1), mit einem Gradierwerk (2) zur Steuerung der Höhe der Luftfeuchtigkeit in dem Testbereich (1) durch Abfuhr einer verdunsteten Fluidmenge und mit einer Einrichtung (4) zur Messung der Höhe der Luftfeuchtigkeit in Abhängigkeit von der Zeit während einer Testdauer.

2. Vorrichtung nach Anspruch 1 mit einer Steuerung des Verlaufs der Luftfeuchtigkeit in Abhängigkeit vom Abstand zum Gradierwerk (2).

3. Vorrichtung nach Anspruch 1 oder 2, wobei das Gradierwerk (2) mehrere Flügel (8) umfasst zur Ausbildung eines teilumstellten Testbereichs (1).

4. Vorrichtung nach einem der Ansprüche 1 bis 3, wobei das Gradierwerk (2) zwei nebeneinander angeordnete Rieselflächen (7) aufweist, die einen Winkel einschließen.

5. Vorrichtung nach einem der Ansprüche 1 bis 4, wobei das Gradierwerk (2) eine Rieselfläche (7) aufweist, die aus einem Gestrüpp aus Zweigen gebildet ist.

6. Vorrichtung nach einem der Ansprüche 1 bis 5, wobei als Fluid Wasser verwendbar ist.

7. Vorrichtung nach Anspruch 6, wobei das Wasser salzhaltig ist.

8. Vorrichtung nach einem der Ansprüche 1 bis 7, wobei das Gradierwerk (2) als Teil eines Sichtschutzes um den Testbereich (1) ausgebildet ist.

9. Vorrichtung nach einem der Ansprüche 1 bis 8, wobei das Gradierwerk (2) mit einem Überkletterungsschutz ausgestaltet ist.

10. Vorrichtung nach einem der Ansprüche 1 bis 9, wobei eine mit der Einrichtung (4) zur Messung der Höhe der Luftfeuchtigkeit verbundene Steuerung (9) vorgesehen ist, die zur Berieselung des Gradierwerks (2) mit Fluid bei Unterschreiten eines minimalen Wertes für die gemessene Luftfeuchtigkeit ausgestaltet ist.

11. Vorrichtung nach einem der Ansprüche 1 bis 10, wobei eine Einrichtung (10) zur Aufzeichnung der gemessenen Höhe der Luftfeuchtigkeit während der Testdauer vorgesehen ist.

## Claims

1. Apparatus for increasing the atmospheric humidity in open-air weathering of test specimens in a testing area (1), having a graduation tower (2) for controlling the level of atmospheric humidity in the testing area (1) by release of an amount of evaporated fluid, and having a device (4) for measuring the level of the atmospheric humidity in dependence on time during a testing period.

2. Apparatus according to claim 1, having a means for controlling the variation in atmospheric humidity in dependence on distance from the graduation tower (2).

3. Apparatus according to claim 1 or 2, wherein the graduation tower (2) comprises a plurality of wings (8) for formation of a partially surrounded testing area (1).

4. Apparatus according to one of claims 1 to 3, wherein the graduation tower (2) has two trickle-down areas (7) arranged next to one another, which form an included angle.

5. Apparatus according to one of claims 1 to 4, wherein the graduation tower (2) has a trickle-down area (7) which is formed by undergrowth material comprising twigs.

6. Apparatus according to one of claims 1 to 5, wherein the usable fluid is water.

7. Apparatus according to claim 6, wherein the water is saline.

8. Apparatus according to one of claims 1 to 7, wherein the graduation tower (2) is constructed as part of sight-screening around the testing area (1).

9. Apparatus according to one of claims 1 to 8, wherein the graduation tower (2) is constructed with anti-climb protection.

10. Apparatus according to one of claims 1 to 9, wherein there is provided a control means (9) connected to the device (4) for measuring the level of the atmospheric humidity and arranged to cause fluid to trickle down the graduation tower (2) if the measured atmospheric humidity drops below a minimum value.

11. Apparatus according to one of claims 1 to 10, wherein there is provided a device (10) for recording the measured level of the atmospheric humidity during the testing period.

## Revendications

1. Dispositif pour augmenter l'humidité de l'air lors d'une exposition aux intempéries d'échantillons dans une zone de test (1), comprenant une unité de graduation (2) pour contrôler le niveau d'humidité de l'air dans la zone de test (1) par évacuation d'une quantité de fluide évaporée et comprenant un système (4) pour mesurer le niveau d'humidité de l'air en fonction du temps pendant une période de test.

2. Dispositif selon la revendication 1, comprenant une commande de la courbe d'humidité de l'air en fonction de la distance à l'unité de graduation (2).

3. Dispositif selon la revendication 1 ou 2, dans lequel l'unité de graduation (2) comprend plusieurs ailettes (8) pour constituer une zone de test (1) partiellement entourée.

4. Dispositif selon l'une quelconque des revendications 1 à 3, dans lequel l'unité de graduation (2) présente deux surfaces d'écoulement (7) disposées l'une à côté de l'autre qui forment entre elles un angle.

5. Dispositif selon l'une quelconque des revendications 1 à 4, dans lequel l'unité de graduation (2) présente une surface d'écoulement (7) qui est formée d'un enchevêtrement de branchages.

6. Dispositif selon l'une quelconque des revendications 1 à 5, dans lequel on peut utiliser de l'eau comme fluide.

7. Dispositif selon la revendication 6, dans lequel l'eau est de l'eau salée.

8. Dispositif selon l'une quelconque des revendications 1 à 7, dans lequel l'unité de graduation (2) est réalisée sous forme d'une partie d'un écran coupe-vue autour de la zone de test (1).

9. Dispositif selon l'une quelconque des revendications 1 à 8, dans lequel l'unité de graduation (2) est configurée avec une protection contre l'escalade.

10. Dispositif selon l'une quelconque des revendications 1 à 9, dans lequel il est prévu une commande (9) associée au système (4) de mesure du niveau d'humidité de l'air, qui est configurée pour arroser l'unité de graduation (2) avec un fluide dans le cas où une valeur minimale pour l'humidité de l'air mesurée n'est pas atteinte.

11. Dispositif selon l'une quelconque des revendications 1 à 10, dans lequel il est prévu un système (10) pour afficher le niveau d'humidité de l'air mesuré pendant la période de test.
